# DEMANDE DE BREVET EUROPEEN

(11) **EP 4 711 866 A1**
(43) Date de publication de la demande: **18.03.2026**
(21) Numéro de dépôt: 25200587.1
(22) Date de dépôt: 05.09.2025
(51) Int. Cl.: G05B 13/02, G05B 15/02

(54) **SYSTÈME DE PRÉVISION ADAPTATIF**

(30) Priorité: 13.09.2024 FR 2409764
(71) Demandeur: Commissariat à l'Energie Atomique et aux Energies Alternatives, 75015 Paris (FR); Université Grenoble Alpes, 38400 Saint-Martin-d'Hères (FR); Centre National de la Recherche Scientifique, 75016 Paris (FR); Universite De Chambery Universite Savoie Mont Blanc, 73011 Chambery Cedex (FR)
(72) Inventeur: BAYLE, Raphaël, 38000 Grenoble (FR); REYBOZ, Marina, 38054 Grenoble Cedex 09 (FR); LOMET, Aurore, 38054 Grenoble Cedex 09 (FR); MERMILLOD, Martial, 38040 Grenoble Cedex 9 (FR)
(74) Mandataire: Cabinet Beaumont

(57) **Abrégé**

La présente description concerne un système de pilotage configuré pour fournir et/ou recevoir dans un réservoir tampon, une quantité d'une ressource destinée à ou reçue d'un système cible (102), le système de pilotage comprenant :
- au moins un capteur (106) configuré pour mesurer, périodiquement et dans un premier intervalle de temps, des quantités de la ressource fournie et/ou reçue ;
- un dispositif de traitement (110) configuré pour effectuer une opération de traitement sur les mesures effectuées par l'au moins un capteurs, l'opération de traitement correspondant à la génération d'une première série temporelle dont les valeurs sont des cumuls des quantités mesurées à plusieurs instants temporels ;
le dispositif de traitement comprenant en outre un réseau de neurones (202) pour générer au moins une estimation de quantité sur la base de la première série temporelle, et pour commander un actionneur (108).

## Description

### Domaine technique

La présente description concerne de façon générale les systèmes de prédiction adaptatif, et en particulier un système adaptatif pour la mise à disposition de ressources.

### Technique antérieure

Les modèles et systèmes de prévision de consommation, par exemple de consommation d'un fluide tel que de l'eau chaude sanitaire, permettent de fournir une prévision de la quantité de la ressource qui sera requise ultérieurement. Par exemple, de tels modèles permettent de prédire la consommation d'eau chaude d'un bâtiment jour après jour. Ces prévisions permettent par exemple d'anticiper la production de la ressource, par exemple d'anticiper un volume d'eau à chauffer. Les prévisions effectuées permettent ainsi de réaliser des économies de production.

Il est souhaitable que de tels modèles et systèmes soient capables de s'adapter à des changements d'habitudes de consommation, sans pour autant oublier les habitudes du passé.

Il existe un besoin d'un système configuré pour mettre à disposition une ressource tout en s'adaptant à des changements d'habitudes de consommation.

### Résumé de l'invention

Selon un mode de réalisation, il est prévu un système de pilotage configuré pour fournir et/ou recevoir dans un réservoir tampon, une quantité d'une ressource destinée à ou reçue d'un système cible, le système de pilotage comprenant :
- au moins un capteur configuré pour mesurer, périodiquement et dans un premier intervalle de temps, des quantités de la ressource fournie et/ou reçue ;
- un dispositif de traitement configuré pour effectuer une opération de traitement sur les mesures effectuées par l'au moins un capteurs, l'opération de traitement correspondant à la génération d'une première série temporelle dont les valeurs sont des cumuls des quantités mesurées à plusieurs instants temporels ;
le dispositif de traitement comprenant en outre un réseau de neurones, configuré pour recevoir la première série temporelle, pour générer au moins une estimation de quantité sur la base de la première série temporelle, et pour commander un actionneur provoquant la préparation du réservoir tampon en vue de la fourniture et/ou de la récupération de la quantité estimée de ressource vers ou depuis le système cible.

Selon un mode de réalisation, le dispositif de traitement est configuré pour réinitialiser les valeurs de la première série temporelle périodiquement, par exemple toutes les 24 heures.

Selon un mode de réalisation, le réseau de neurones comprend une partie prédictive configurée pour générer des estimations de quantité sur un horizon temporel prédéterminé, pour un intervalle de temps postérieur au premier intervalle de temps.

Selon un mode de réalisation, l'entrainement du réseau de neurones est effectué selon un procédé d'apprentissage incrémental.

Selon un mode de réalisation, le réseau de neurones comprend en outre une partie auto-associative configurée pour générer une deuxième série temporelle sur la base de la première série temporelle, la deuxième série temporelle étant utilisée comme pseudo-donnée dans le procédé d'apprentissage incrémental.

Selon un mode de réalisation, la partie prédictive du réseau de neurones comprend au moins une couche dense.

Selon un mode de réalisation, le dispositif de traitement comprend une unité de traitement comprenant le réseau de neurones et une unité de contrôle configurée pour commander l'actionneur, l'unité de traitement étant en outre configurée pour normaliser les estimations générées par le réseau de neurones incrémentales avant de les fournir à l'unité de contrôle.

Selon un mode de réalisation, le réseau de neurones comprend une couche de type attentionnelle.

Selon un mode de réalisation, le réseau de neurones comprend deux sous-réseaux, chacun comprenant une partie auto-associative et une partie prédictive et configurés pour effectuer une opération de transfert d'apprentissage l'un vers l'autre.

Selon un mode de réalisation, l'au moins un actionneur est configuré pour activer la production et/ou l'absorption de la ressource dans le réservoir tampon à partir ou vers une ressource brute, la ressource étant prélevée du réservoir ou apportée dans le réservoir vers/depuis le système cible de manière intermittente.

Selon un mode de réalisation, l'actionneur est un moyen de chauffage d'un fluide et la ressource est ledit fluide chauffé à une ou plusieurs températures prédéfinies.

Selon un mode de réalisation, l'au moins un capteur est un débitmètre configuré pour mesurer le débit du fluide chauffé consommé par un bâtiment, à intervalle de temps régulier, par exemple toutes les 30 minutes.

Selon un mode de réalisation, l'actionneur est un groupe électrogène ou un convertisseur d'énergie électrique en une autre forme d'énergie stockable et la ressource est une énergie électrique stockée dans une batterie constituant ledit réservoir tampon.

Selon un mode de réalisation, il est prévu un procédé de pilotage **d'un** système cible configuré pour fournir une quantité d'une ressource, le procédé comprenant :
- la mesure, périodiquement et dans un premier intervalle de temps, par au moins un capteur d'un système de pilotage, d'une quantité de ressource utilisée ;
- la fourniture de la quantité mesurée à un dispositif de traitement ;
- l'application, par le dispositif de traitement, d'une opération de traitement sur les mesures effectuées par l'au moins un capteurs, correspondant à la génération d'une première série temporelle dont les valeurs sont les cumuls des quantités mesurées ;
- la génération, par un réseau de neurones du dispositif de traitement et sur la base de la première série temporelle, d'une estimation de quantité de ressource ; et
- la commande, par le dispositif de traitement, d'un actionneur du système de pilotage, provoquant la préparation du réservoir tampon en vue de la fourniture et/ou de la récupération de la quantité estimée de ressource vers ou depuis le système cible.

Selon un mode de réalisation, l'entrainement du réseau de neurones est mis à jour sur la base de la première série temporelle.

Selon un mode de réalisation, le réseau de neurones comprend :
- une partie prédictive configurée pour générer des estimations de quantité sur un horizon temporel prédéterminé, pour un intervalle de temps postérieur au premier intervalle de temps ; et
- une partie auto-associative configurée pour générer une deuxième série temporelle sur la base de la première série temporelle, la deuxième série temporelle étant utilisée comme pseudo-donnée dans un procédé d'apprentissage incrémental.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A est un schéma par bloc représentant un système adaptatif, selon un mode de réalisation de la présente description ;
la figure 1B est un schéma par bloc représentant plus en détail une partie du système adaptatif illustré en figure 1A ;
la figure 1C est un schéma par bloc représentant des exemples d'environnements auxquels s'appliquent les modes de réalisation de la présente description ;
la figure 2 illustre de manière schématique des étapes de traitement de données, selon un mode de réalisation de la présente description ;
la figure 3 illustre une architecture d'un réseau de neurones utilisée dans un procédé d'apprentissage incrémental, selon un mode de réalisation de la présente description ;
la figure 4 représente trois phases dans un procédé consistant à retenir des anciens souvenirs dans un réseau de neurones artificiel ;
la figure 5 représente schématiquement un exemple de réseau de neurones artificiel dont l'entrainement s'effectue selon un procédé d'apprentissage incrémental ;
La figure 6 est un graphique illustrant l'erreur moyenne absolue entre des estimations réalisées pour des consommations d'eau chaude dans un bâtiment et les consommations réelles ;
la figure 7 est un graphique représentant une consommation estimée par le système et la consommation réelle ;
la figure 8A est un graphique illustrant un exemple de données d'entrée au réseau de neurones artificiel ;
la figure 8B est un graphique illustrant un exemple de données d'entrée au réseau de neurones artificiel ;
la figure 9A est un graphique représentant une consommation estimée par un système mettant en œuvre un réseau de neurones adaptatif, selon un mode de réalisation de la présente description ; et
la figure 9B est un graphique représentant une consommation estimée par le système, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les techniques pour l'apprentissage d'un réseau neuronal artificiel, basées par exemple sur la minimisation d'une fonction objective comme une fonction de coût, sont connues de la personne du métier, et ne seront pas décrites en détail.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % ou à 10° près, de préférence à 5 % ou à 5° près.

Bien que dans la description suivante des exemples de modes de réalisation soient basés sur une architecture de réseau de neurones artificiel d'attention multi-tête (MHA - en anglais « Multi-Head Attention »), utilisée couramment comme brique de base des réseaux transformeurs (en anglais « Transformers »), il sera clair pour la personne du métier que les principes peuvent être appliqués plus largement à tout réseau de neurones artificiel (ANN), complètement interconnecté ou non, comme un réseau neuronal à convolution (CNN), ou tout autre type de réseau de neurones artificiel.

Dans la description qui suit, on supposera que les termes suivants ont les définitions suivantes :
- "données d'entrée réelles" ou "échantillons de données d'entrée" : échantillons de données collectés et utilisés pour l'apprentissage d'un ANN à entraîner, ces données d'entrée étant désignées comme "réelles" puisqu'elles ne sont pas des données générées par ordinateur, et ne sont par conséquent pas synthétiques ;
- "échantillon aléatoire" : échantillon synthétique généré par ordinateur sur la base de valeurs aléatoires ou pseudo-aléatoires ;
- "donnée d'apprentissage" : toute donnée (réelle ou synthétique) pouvant être utilisée pour l'apprentissage d'un ou plusieurs réseaux neuronaux ;
- "données synthétiques" ou "pseudo-données" : données synthétiques, par exemple générées par ordinateur, pouvant être utilisées comme données d'apprentissage, ces données comprenant par exemple au moins des pseudo-échantillons, et dans le cas de l'apprentissage d'un classificateur, des pseudo-étiquettes associées aux pseudo-échantillons ;
- "pseudo-échantillon" : échantillon synthétique généré par ordinateur généré sur la base d'un procédé de génération de données guidé ou en utilisant un prétraitement ; et
- "auto-associative" : la fonction consistant à reproduire des entrées, comme dans un auto-codeur. Toutefois, le terme auto-codeur est souvent associé à un ANN qui doit réaliser une certaine compression, par exemple impliquant une compression de l'espace latent signifiant que lesdites une ou plusieurs couches cachées contiennent moins de neurones que le nombre de neurones de l'espace d'entrée. En d'autres termes, l'espace d'entrée est incorporé dans un espace plus petit. Le terme "auto-associative" est utilisé ici pour désigner une fonction de réplication similaire à celle d'un auto-codeur, mais une fonction auto-associative est plus générale en ce qu'elle peut impliquer ou pas de la compression.

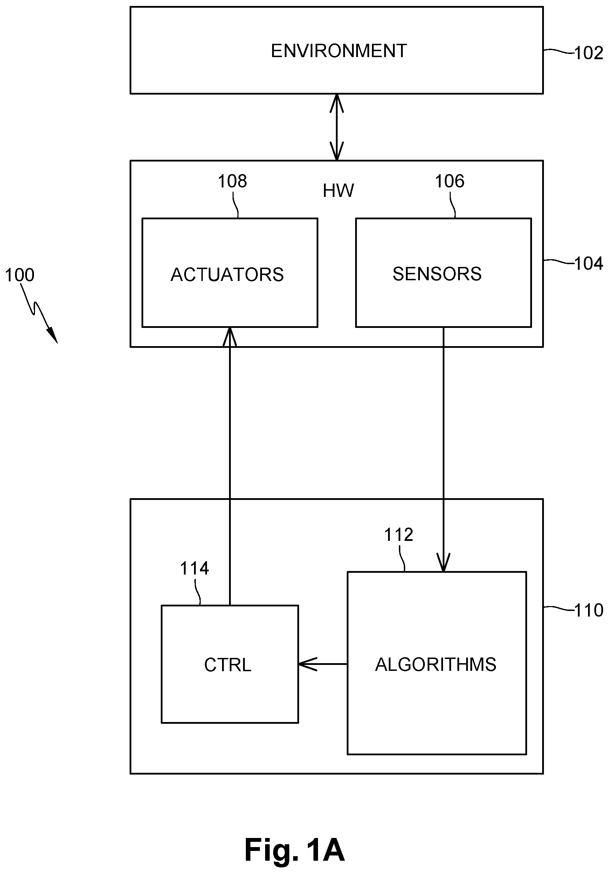

La figure 1A est un schéma par bloc représentant un système adaptatif 100, selon un mode de réalisation de la présente description. En particulier, le système adaptatif 100 comprend un système cible 102 (ENVIRONMENT). A titre d'exemple, le système cible 102 est un système configuré pour mettre à disposition ou récupérer d'un ou plusieurs utilisateurs, une ressource telle qu'un fluide, par exemple, de l'eau, du gaz, de l'essence etc. Dans un autre exemple, la ressource est de l'électricité. Le système cible 102 est en outre, par exemple configuré pour effectuer une action sur ladite ressource, par exemple une action de compression dans un réservoir de préparation, avant de le mettre à disposition du ou des utilisateurs, ou par exemple une action de préparation d'un réceptacle (vidage d'un réservoir), avant de la récupérer du ou des utilisateurs. A titre d'exemple, le système cible 102 est un système de chauffage, tel que par exemple une pompe à chaleur pour la consommation d'eau chaude sanitaire ou d'eau chaude de chauffage ou bien de liquide de refroidissement. De manière générale, la ressource est une ressource qui, dans le cadre applicatif, est consommée/produite par intermittence par les utilisateurs et se dégrade dans le temps dans un réservoir pré-utilisation ou post-utilisation. Par exemple, de l'eau chaude sanitaire est consommée de manière ponctuelle et intermittente par des occupants d'un bâtiment. De plus, une fois l'eau chauffée par la pompe à chaleur, le phénomène de déperdition thermique a pour conséquence que l'eau chaude se refroidit. La surgénération d'eau chaude est alors couteuse, et il est donc souhaitable que le système soit configuré pour que la quantité nécessaire de ressource, suite à sa manipulation par l'actionneur, soit disponible dans un réservoir lorsqu'un consommateur en fait la demande.

Le système adaptatif 100 comprend en outre un système de pilotage comprenant un bloc matériel 104 (HW) et un dispositif de traitement 110.

Le bloc matériel 104 comprend par exemple un ou plusieurs capteurs 106 (SENSORS). Le bloc matériel comprend en outre un ou plusieurs actionneurs 108 (ACTUATORS) configuré pour agir sur la ressource ou sur le système 102 en lien avec un réservoir tampon non représenté.

Le dispositif de traitement 110 comprend une unité de traitement 112 (ALGORITHMS) configurée pour recevoir des signaux captés par l'un ou plusieurs capteurs 106 et pour exécuter des instructions de programme afin d'appliquer des algorithmes aux signaux captés, et une unité de contrôle 114 (CTRL) configurée pour générer des signaux de commande de l'un ou plusieurs actionneurs 108. A titre de variant, l'unité de traitement 112 et l'unité de contrôle 114 sont un même bloc fonctionnel, par exemple un ordinateur configuré pour réaliser les fonctions à la fois de l'unité de traitement 112 et de l'unité de contrôle 114.

Dans l'exemple où le système cible 102 comprend une pompe à chaleur, le ou les capteurs 106 sont par exemple configurés pour mesurer une température intérieure d'un bâtiment. Le ou les capteurs 106 sont, par exemple, en outre configurés pour mesurer une température extérieure. Le ou les capteurs 106 comprennent, par exemple, en outre un débitmètre configuré pour mesurer le débit du fluide chauffé fournit par la pompe à chaleur au bâtiment. Le ou les capteurs sont en outre configurés pour fournir les mesures effectuées comme données d'entrée à l'unité de traitement 112. L'unité de traitement 112 est alors configurée pour générer une estimation de consommation du fluide, par le bâtiment, pour un horizon temporel futur. Ces estimations sont fournies à l'unité de contrôle 114. L'unité de contrôle 114 est alors configurée pour, à l'horizon temporel, commander le ou les actionneurs 108 afin de fournir au bâtiment la quantité de fluide estimée, en agissant sur les actionneurs préalablement à une délivrance ou une réception d'une ressource.

Dans un autre exemple, le ou les capteurs 106 sont des capteurs de température intérieure et/ou extérieure d'un système de chauffage et/ou de refroidissement, comprenant par exemple une pompe à chaleur comme source d'énergie principale. Dans un tel cas, le ou les actionneurs 108 sont par exemple des circuits d'activation qui activent les systèmes de chauffage ou de refroidissement.

Dans d'autres exemples, le ou les actionneurs 108 comprennent par exemple un actionneur électronique, par exemple configuré pour commander le fonctionnement d'un ou plusieurs circuits, tels que le réveil d'un circuit du mode veille, ou l'entrée d'un circuit dans un mode veille. Dans un autre exemple, le ou les actionneurs 108 comprennent par exemple un système par exemple configuré pour commander un taux de production ou d'absorption de la ressource en question. Dans un autre exemple, le ou les actionneurs 108 sont configurés pour ajuster et/ou activer et/ou éteindre la production/absorption de la ressource, en lien avec un réservoir tampon.

Dans l'exemple où le système cible 102 est une pompe à chaleur configurée pour fournir de l'eau chaude sanitaire à un bâtiment, le ou les capteurs 106 sont configurés pour mesurer la consommation d'eau chaude, par le bâtiment, par intervalle de temps régulier de l'ordre de la dizaine de minutes, par exemple par intervalle de temps d'entre 5 minutes et 40 minutes inclus. L'unité de contrôle 114, sur la commande de l'unité de traitement 112, est alors configurée pour générer des estimations de la consommation d'eau chaude à différents horizons temporels, par exemple à 0,5 heure, 1 heure, 2 heures, 6 heures, 12 heures, 18 heures, 24 heures. Cette estimation à multiples horizons temporels est mise en œuvre pour permettre à l'unité de contrôle 114 de mettre à jour ses commandes en fonction de la dernière prédiction. Dans un exemple, les estimations sont effectuées à fréquences variables. Dans d'autres exemples, les estimations sont effectuées de manière périodique, par exemple une ou plusieurs fois par jour ou encore une ou plusieurs fois par semaine. A titre d'exemple, le système est en outre capable de réactualiser ces estimations.

L'unité de contrôle 114 est alors configurée pour commander le ou les actionneurs 108, pour que la quantité d'eau chaude estimée soit disponible au moment associé. A titre d'exemple, le ou les actionneurs 108 sont des moyens de chauffage d'eau et l'unité de contrôle 114 provoque leur fonctionnement à temps différé afin que la quantité estimée de ressource modifiée soit disponible dans le réservoir au moment associé.

De manière générale, le système 100 est un système configuré pour le pilotage d'un dispositif mettant à disposition ou récupérant une ressource dont la consommation ou la production varie au cours d'une journée, d'une semaine, etc. Le pilotage est effectué sur la base des estimations réalisées par l'unité de contrôle 114 sur la commande de l'unité de traitement 112. Selon un mode de réalisation, l'unité de traitement 112 met en œuvre un algorithme adaptatif, et réalise par exemple un réseau de neurones artificiel dont l'entrainement s'effectue selon un procédé incrémental. En d'autres termes, le réseau de neurones artificiel réalisé par l'unité de traitement 112 est configurée pour s'adapter à de nouvelles données, par exemples mesurées par le ou les capteurs 106. L'apprentissage du réseau de neurones s'effectue par exemple en continue, même lorsque le réseau de neurones effectue des tâches d'inférence. Ainsi, les estimations, générées par l'unité de traitement 112, prennent, par exemple, en compte des changements d'habitude de consommation de la ressource.

L'apprentissage continu du réseau de neurones est important dans de telles applications afin de pouvoir s'adapter à des conditions précédemment inconnues, telles que des températures extrêmes, un déménagement, des occupants du bâtiment sortant de vacances, des occupants du bâtiment en télétravail par jour de grand froid, des changements d'habitudes d'un ou plusieurs occupants du bâtiment, par exemple la naissance d'un enfant, etc.

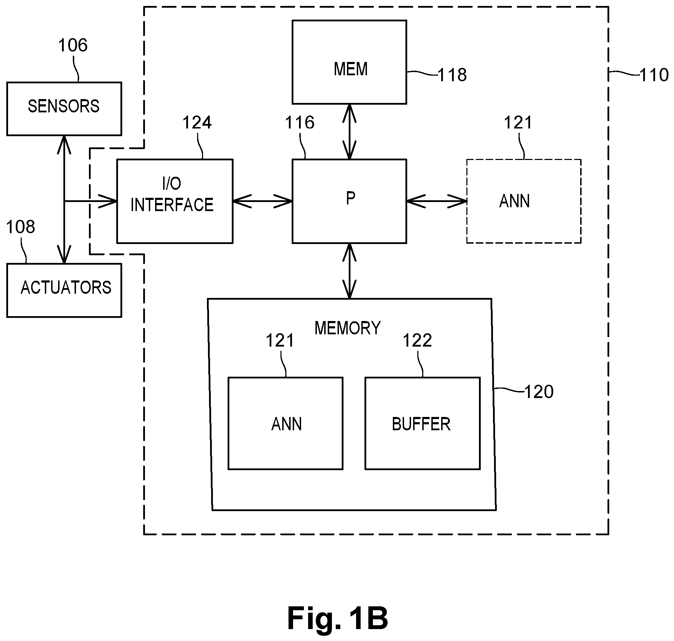

La figure 1B est un schéma par bloc représentant plus en détail le système de pilotage du système adaptatif 100 illustré en figure 1A. En particulier, la figure 1B est un schéma fonctionnel représentant le ou les capteurs 106, le ou les actionneurs 108, et le dispositif de traitement 110 mettant en œuvre les unités de traitement et de contrôle 112, 114. Dans certains modes de réalisation, le dispositif de traitement 110 est un dispositif combinant des capacités de traitement d'intelligence artificielle avec un calcul de bord.

Le dispositif de traitement 110 comprend par exemple un ou plusieurs processeurs (P) 116 sous le contrôle d'instructions stockées dans une mémoire d'instructions (MEM) 118. Dans un autre exemple, le dispositif de traitement 110 comprend une ou plusieurs unités d'accélération de réseaux de neurones (NPU- « Neural Processing Unit »), ou unité de traitement graphique (GPU - « Graphics Processing Units »), sous le contrôle des instructions stockées dans la mémoire d'instructions 118. L'un ou plusieurs processeurs 116, sous le contrôle d'instructions de la mémoire d'instructions 118, est par exemple configuré pour mettre en œuvre les fonctions de l'unité de traitement 112 et de l'unité de contrôle 114.

Une autre mémoire (MEMORY) 120, par exemple comprise dans un même dispositif de mémoire que la mémoire 118, ou dans un dispositif de mémoire séparé, stocke un réseau de neurones artificiel (ANN) 121 de l'unité de traitement 112, de sorte qu'une émulation informatique de ce réseau de neurones artificiel est possible.

Par exemple, le réseau de neurones artificiel 121 est entièrement défini dans la mémoire 120, incluant la définition de la structure du réseau de neurones artificiel, c'est-à-dire le nombre de neurones dans les couches d'entrée et de sortie et dans les couches cachées, le nombre de couches cachées, les fonctions d'activation appliquées par les circuits de neurones, etc. En outre, des paramètres du réseau de neurones artificiel 121, appris lors de l'apprentissage, tels que ses paramètres et poids, sont par exemple stockés dans la mémoire 120. Ainsi, le réseau de neurone artificiel 121 est entrainable et/ou exploitable dans l'environnement informatique du dispositif de traitement 110.

La mémoire 120, ou un autre dispositif mémoire couplé au dispositif de traitement 116, comprend par exemple une mémoire tampon (BUFFER) 122.

Dans un autre exemple le réseau de neurones artificiel 121 réalisé par l'unité de traitement 112 est implémenté au moins partiellement par un ou plusieurs circuits matériels représentés par un rectangle en pointillés (ANN) 121 sur la figure 1B.

Le dispositif de traitement 110 comprend, par exemple, en outre une interface d'entrée/sortie (I/O INTERFACE) 124 configurée pour recevoir de nouvelles mesures, effectuées par le ou les capteurs 106. L'interface d'entrée/sortie est par exemple, en outre configurée pour fournir des signaux de contrôle, par exemple générés par l'unité de contrôle 114, à le ou les actionneurs 108 afin de les contrôler.

A titre d'exemple, le dispositif de traitement 110 est configuré en outre pour effectuer une détection d'anomalie sur des échantillons de données d'entrée, fournis par le ou les capteurs 106. La détection d'anomalies permet, par exemple, de vérifier que les mesures ne sont pas des mesures aberrantes, causée par exemple par un capteur défectueux. La détection d'anomalie permet en outre de vérifier que les mesures ne sont pas corrompues ou modifiées frauduleusement, ce qui pourrait avoir un impact de sécurité.

Le dispositif de traitement 110 est en outre configuré pour effectuer un pré-traitement des données mesurées par le ou les capteurs 106. En effet, les données mesurées par le ou les capteurs 106 sont, par exemple, des données qui sont majoritairement des valeurs nulles, et les vecteurs comprenant les données d'entrée sont alors des vecteurs creux. Le pré-traitement sert à cumuler les données sur des plages de temps prédéfinies afin de générer des vecteurs d'entrée relativement denses. A titre d'exemple, lorsque le ou les capteurs 106 sont configurés pour mesurer une consommation d'eau chaude sanitaire d'un bâtiment, les données comprennent une majorité de valeurs nulles. En effet, l'eau chaude sanitaire est généralement consommée de manière intermittente. Cependant, l'apprentissage d'un réseau de neurones artificiel adaptatif basé sur des données d'entrée comprenant majoritairement des valeurs nulles entraine un surapprentissage des valeurs nulles. Ce surapprentissage risque donc d'induire la prédiction de beaucoup de valeurs nulles par le réseau de neurones artificiels si aucun prétraitement tel que celui proposé n'est réalisé.

Un inconvénient intervenant généralement dans les réseaux de neurones adaptatifs est qu'il est souvent difficile d'obtenir un modèle entraîné tout en conservant les informations précédemment apprises. Ce phénomène d'oubli des apprentissage passé est connu sous le nom d' « oubli catastrophique **».** Cependant, l'usage d'un procédé d'entrainement incrémental permet au modèle de prédiction d'apprendre de nouvelles habitudes de consommation sans oublier les apprentissages précédents.

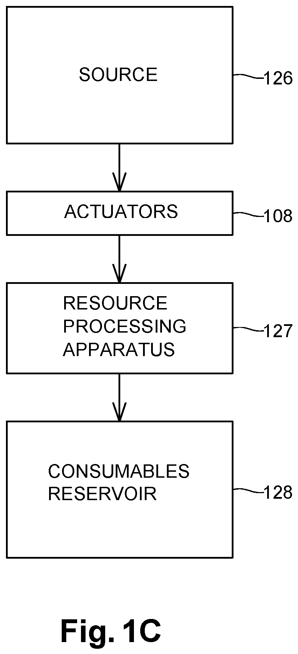

La figure 1C est un schéma par bloc représentant des exemples d'environnements 102 auxquels s'appliquent les modes de réalisation de la présente description.

De manière générale, le ou les actionneurs 108 sont configurés pour agir sur une ressource brute 126 (SOURCE). Le ou les actionneurs 108 (ACTUATORS) sont configurés pour agir sur un appareil de traitement de la ressource 127 (RESSOURCE PROCESSING APPARATUS) agissant sur la ressource brute afin de produire ou récupérer une ressource consommable 128 (CONSUMABLES RESERVOIR) stockée dans un réservoir. La consommation ou la réception de la ressource consommable 128 s'effectue par intermittence. De plus, la ressource consommable peut se détériorer dans le temps dans le réservoir et/ou la production (à partir de la ressource brute 126) et/ou la transformation de la ressource consommable (en cas de réception) peuvent entraîner une consommation énergétique des actionneurs. Il est donc important que le ou les actionneurs 108 agissent en temps voulu afin que la bonne quantité de ressource consommable 128 soit disponible dans le réservoir tampon lorsque nécessaire, en limitant le plus possible les pertes énergétiques.

A titre d'exemple, l'environnement 102 est un bâtiment comprenant une pompe à chaleur. Comme décrit en relation avec la figure 1A, le ou les capteurs 106 sont configurés pour mesurer, entre autres, le débit d'eau chaude sanitaire, ou de l'eau de chauffage, consommée par le bâtiment et pour fournir ces mesures au dispositif de traitement 110. Le dispositif de traitement 110 est configuré pour estimer la consommation d'eau chaude sur un horizon temporel. Le ou les actionneurs 108 activent, par exemple, la pompe à chaleur du bâtiment. La pompe à chaleur est par exemple reliée à un réseau d'eau, ou à un réservoir d'eau. La pompe à chaleur est alors configurée pour, sous la commande de l'unité de contrôle 114, chauffer une quantité d'eau à une température donnée et la stocker dans un réservoir. A titre d'exemple, la quantité d'eau à chauffer est déterminée par les estimations produites par l'unité de traitement 110. A titre d'exemple, la température à laquelle est réchauffée l'eau ne dépend pas des estimations et est, par exemple, programmable directement sur la pompe à chaleur. De plus, la pompe à chaleur met un certain délai, par exemple de l'ordre de quelques minutes à quelques heures, pour chauffer de l'eau. Il convient donc d'anticiper la production d'eau chaude de sorte que celle-ci soit directement disponible lorsqu'un occupant du bâtiment en fait la demande.

L'eau chaude réchauffée correspond alors à la ressource consommable 128 et est par exemple stockée dans une cuve ou un réservoir de la pompe à chaleur, ou dans une cuve ou un réservoir relié au bâtiment. Une fois chauffé et stockée, l'eau chaude est sujette à la déperdition thermique. Ce phénomène est par exemple accentué lorsque le réservoir stockant l'eau chaude est mal isolé, lorsque la température extérieure au réservoir est faible, etc. Il est donc préférable que l'eau chaude soit consommée rapidement et qu'elle ne reste pas stockée dans la cuve ou réservoir trop longtemps.

Dans un autre exemple, l'environnement 102 est un système d'alimentation électrique comprenant par exemple une batterie tampon. La ressource consommable 128 correspond par exemple à de l'énergie électrique stockée dans la batterie tampon. Dans cet exemple, le ou les actionneurs 108 agissent, par exemple, sur un groupe électrogène, configuré pour générer de l'électricité et pour la stocker dans la batterie tampon ou agissent sur un « groupe électrogène inverse » réalisant une conversion d'électricité en une autre forme d'énergie pour la prélever de la batterie tampon et la convertir sous une autre forme dans un réservoir de ressource brute. Le groupe électrogène ou son inverse est configuré pour produire ou récupérer de l'énergie électrique à partir une ressource brute 126 telle que, par exemple, un carburant tel que de l'essence, du gaz naturel, du gaz de pétrole liquéfié, un biocarburant, du fioul, etc., ou à partir ou vers une ressource brute 126 telle que, par exemple, de l'hydrogène, de l'eau montée dans un barrage électrique, etc.

Dans un exemple d'application, la batterie tampon est utilisée pour récupérer de l'énergie sur un réseau électrique et la batterie tampon permet d'absorber des surcharges de production électrique par des producteurs d'énergie électriques tels que des éoliennes, des panneaux solaires ou autres. La même batterie tampon peut être utilisée pour stocker de l'énergie électrique préalablement à une consommation par une utilisation. La batterie tampon permet d'absorber rapidement des « forts courants » ou de délivrer des « forts courants **».** Elle est particulièrement utile dans un système ou sa conversion vers/depuis un autre type de stockage d'énergie (réservoir de gaz, barrage électrique, etc...) prend du temps et ne permet pas de fournir/absorber les forts courants. Dans ce cas, le niveau de remplissage de la batterie tampon est par exemple géré en fonction de la prévision de consommation/réception d'électricité. Ainsi, s'il est prévu qu'il sera nécessaire d'absorber de l'électricité à un moment donné, alors il faut au préalable vider la batterie en tout ou partie. Inversement, s'il est prévu qu'il sera nécessaire de fournir de l'électricité, alors il faut remplir la batterie au préalable. Néanmoins, s'il est prévu une opération d'absorption suivie d'une opération de fourniture, on pourra s'éviter une opération de conversion par les actionneurs pour un meilleur gain énergétique global.

La batterie tampon alimente par exemple des appareils ou systèmes de façon intermittente, par exemple à des fins d'éclairage ou chauffage. Tout comme l'eau chaude sanitaire ou de chauffage, la consommation de l'énergie électrique stockée dans la batterie tampon est variable et relativement « ponctuelle » temporellement, ou alors elle varie entre des valeurs présentant une grande différence sans pour autant que les valeurs faibles soient nulles.

De plus, comme le chauffage de l'eau chaude sanitaire ou l'eau chaude de chauffage, l'utilisation du convertisseur (groupe électrogène ou inverse) est associée à un coût.

Il convient donc d'anticiper la production/absorption d'énergie électrique dans/depuis la batterie tampon afin que celle-ci soit au bon niveau de remplissage selon les besoins futurs.

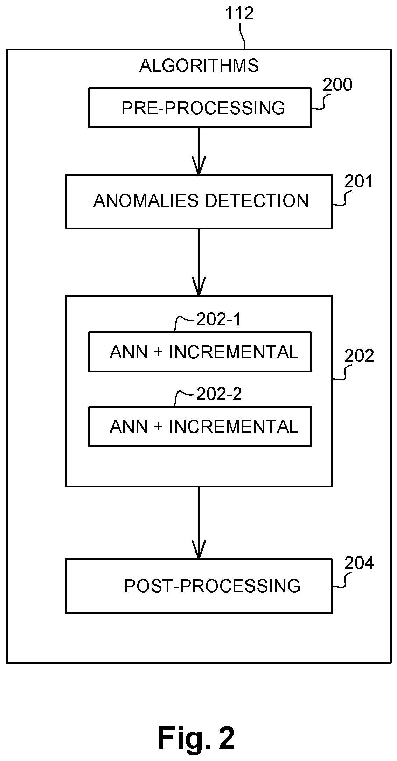

La figure 2 illustre de manière schématique des étapes de traitement de données, effectuées par l'unité de traitement 112, selon un mode de réalisation de la présente description.

A titre d'exemple, l'unité de traitement 112 comprend un module de programme 200 (PRE-PROCESSING) mettant en œuvre une étape de pré-traitement de données lorsqu'il est exécuté par le ou les processeurs 116 du dispositif de traitement 110. Lorsque la ressource est consommée par intermittence, les données mesurées comprennent une majorité de valeurs nulles, l'étape de pré-traitement comprend une accumulation des données sur une période. Le pré-traitement permet ainsi d'éviter d'injecter des valeurs nulles en entrée de l'algorithme. En particulier, le pré-traitement comprend, par exemple, l'accumulation des valeurs mesurées par le ou les capteurs 106 pendant un intervalle de temps afin de générer une valeur cumulative. Le pré-traitement comprend également le regroupement de plusieurs valeurs cumulatives successives formant ainsi une série temporelle. Par exemple, la série temporelle comprend des valeurs cumulatives générées sur une fenêtre temporelle glissante, par exemple correspondant à une période de plusieurs heures, ou plusieurs jours précédant la dernière mesure. A titre d'exemple, le cumul des mesures est réinitialisé à 0 périodiquement, par exemple toutes les 24 heures.

L'unité de traitement 112 comprend en outre un module de programme 201 (ANOMALIES DETECTION) mettant en œuvre un algorithme de détections d'anomalies.

L'unité de traitement 112 comprend en outre un module de programme 202 mettant en œuvre, lorsqu'il est exécuté par le ou les processeurs 116 du dispositif de traitement 110, le réseau de neurones artificiel 121, ainsi qu'un module de programme 204 (POST-PROCESSING) mettant en œuvre, lorsqu'il est exécuté par le ou les processeurs 116 du dispositif de traitement 110, une étape de post-traitement de données.

A titre d'exemple, le ou les capteurs 106 sont configurés pour fournir les mesures à l'unité de traitement 112 dès que celles-ci sont effectuées. L'unité de traitement 112 reçoit alors, à intervalle de temps régulier, des données correspondantes à des consommations réalisées durant cet intervalle de temps. A titre d'exemple, l'unité de traitement 112 reçoit des données toutes les 30 minutes. L'unité de traitement 112 est alors configurée pour prétraiter ces données avant qu'elles soient traitées par le réseau de neurones artificiel 202.

Le module de programme 201 est par exemple configuré pour détecter si les séries temporelles générées comprennent une anomalie. A titre d'exemple, le module de programme 201 est configuré pour détecter si la série temporelle comprend des mesures aberrantes, des mesures corrompues, ou frauduleuse, etc.

Le réseau de neurones 202 est configuré pour fournir une estimation sur la base des séries temporelles fournies par le programme 200. L'estimation générée correspond par exemple à une estimation de la consommation de ressources, par exemple d'eau chaude sanitaire, qui sera demandée dans des horizons temporels à par exemple 0,5 heure, 1 heure, 2 heures, 6 heures, 12 heures, 18 heures, 24 heures.

En particulier, le réseau de neurones mis en œuvre par le module de programme 202 est un réseau de neurones dont l'apprentissage s'effectue selon un procédé incrémental. Le réseau de neurones 202 est, par exemple, configuré pour recevoir de nouvelles données d'entrainement en parallèle, ou suite à la génération d'estimations. Les nouvelles données reçues encodent de nouvelles informations, par exemple des changements d'habitudes dans la consommation de la ressource. Ainsi, l'adaptativité du réseau de neurones lui permet de se mettre à jour afin de prendre en compte les nouvelles informations.

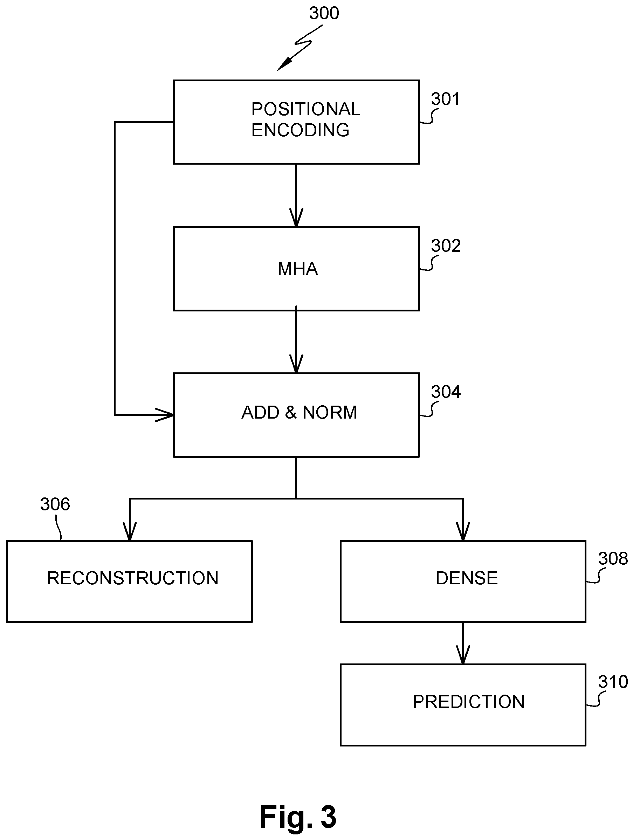

Un exemple de réseau de neurones dont l'apprentissage s'effectue selon un procédé incrémental est décrit ci-après, en relation avec les figures 3 à 5. En particulier, le réseau de neurones mis en œuvre par le module de programme 202 comprend par exemple deux réseaux de neurones artificiels 202-1 et 202-2 (ANN + INCREMENTAL) similaires ou identiques. A titre d'exemple, les deux réseaux de neurones 202-1 et 202-2 sont de type MHA. En particulier, les deux réseaux de neurones 202-1 et 202-2 comprennent chacun une partie prédictive et une partie auto-associative. Les deux réseaux de neurones sont en outre configurés pour réaliser des opérations de transfert de connaissance entre eux.

A titre d'exemple, l'étape de post-traitement, mise en œuvre par le programme 204, comprend l'application d'une pseudo-normalisation adaptée à l'estimation.

La figure 3 illustre une architecture 300 d'un réseau de neurones utilisée dans un procédé d'apprentissage incrémental, selon un mode de réalisation de la présente description. En particulier, le réseau de neurone est un réseau de type MHA ou comprend une ou plusieurs couches attentionnelles.

A titre d'exemple, les entrées du réseau correspondent aux consommations cumulées d'eau chaude sanitaire des six derniers jours, avec un taux d'échantillonnage de deux mesures par heure. De manière générale, les entrées du réseau correspondent à des mesures effectuées par le ou les capteurs 106 ayant été prétraitées.

A titre d'exemple, le réseau comprend une couche d'encodage positionnel 301 (POSITIONAL ENCODING). A titre d'exemple, une telle couche est implémentée tel que décrit dans l'article de 2017 « Attention Is All You Need » des auteurs Vaswani, A.; Shazeer, N.; Parmar, N.; Uszkoreit, J.; Jones, L.; Gomez, A.N.; Kaiser, L. et Polosukhin, I. En particulier, la couche d'encodage positionnel permet d'indiquer au réseau la position courante dans la série temporelle.

Le réseau comprend en outre une ou plusieurs couches d'attention 302 (MHA) configurée pour recevoir les données en sortie de la couche 300. A titre d'exemple, la fonction de coût utilisée pour l'entraînement de la ou des couches 302 correspond à l'erreur quadratique moyenne entre la sortie de la ou des couches 302 et la vérité terrain. En particulier, la ou les couches 302 traitent les éléments de la série temporelle en parallèle, capturant ainsi les relations globales entre tous les éléments de la série dans un seul passage. Les dépendances à long terme et globales sont ainsi prise en compte.

A titre d'exemple, le réseau comprend en outre une ou plusieurs couches de normalisation 304 (ADD & NORM) permettant d'améliorer la convergence du modèle. A titre d'exemple, une telle couche est implémentée tel que décrit dans l'article de 2017 « Attention Is All You Need » des auteurs Vaswani, A.; Shazeer, N.; Parmar, N.; Uszkoreit, J.; Jones, L.; Gomez, A.N.; Kaiser, L. et Polosukhin, I. pour des réseau de type MHA.

La ou les couches 304 sont en outre configurées pour fournir leurs sorties à une partie auto-associative 306 (RECONSTRUCTION) configurée pour générer des pseudo-données sur la base des données fournies par la ou les couches 304. En particulier, la ou les couches 306 comprennent au moins une couche dense. En particulier, la partie auto-associative est configurée pour reproduire les données d'entrée.

A titre d'exemple, la fonction de coût utilisée pour l'entrainement de la partie auto-associative correspond à l'erreur quadratique moyenne entre la sortie de la ou des couches 306 et la vérité terrain.

La partie auto-associative du réseau est similaire à un auto-codeur. Les auto-codeurs sont un type de réseau de neurones artificiel connu de la personne du métier dans lequel, plutôt que d'être entraînés pour réaliser des opérations de prédiction, ou de classification, ils sont entraînés pour reproduire leurs entrées au niveau de leurs sorties. Comme indiqué précédemment, le terme "auto-associative" est utilisé ici pour désigner une fonctionnalité similaire à celle d'un auto-codeur, excepté que l'espace latent n'est pas nécessairement comprimé. En outre, comme pour l'apprentissage d'un auto-codeur, il est possible de réaliser l'apprentissage de la partie auto-associative du réseau de neurones artificiel avec certaines contraintes afin d'éviter que le réseau converge rapidement vers la fonction identité, comme cela est bien connu de la personne du métier.

Le réseau de neurones artificiel comprend en outre une partie prédictive comprenant par exemple des couches denses. Par exemple, la ou les couches 304 sont en outre configurées pour fournir leur sortie à une partie prédictive comprennent des couches dense 308 (DENSE) et 310 (PREDICTION). La couche dense 308 est, par exemple, configurée pour identifier des relations non-linéaires dans la sortie de la ou des couches d'attention 302. La couche 310 est, par exemple, configurée pour effectuer des opérations de régression non-linéaires, sur la base des relations identifiées par la couche 308, afin de générer l'estimation de consommation à des horizons temporels. Par exemple, pour fournir une estimation de la consommation d'eau chaude sanitaire sur des horizons temporels à 0,5 heure, 1 heure, 2 heures, 6 heures, 12 heures, 18 heures, 24 heures. A titre d'exemple, la fonction de coût utilisée pour l'entrainement de la partie prédictive correspond à l'erreur quadratique moyenne entre la sortie de la couche 310 et la vérité terrain, c'est-à-dire la consommation réelle.

Bien qu'un exemple spécifique de modèle de prédiction ait été décrit, d'autres modèles de prédiction sont envisageables.

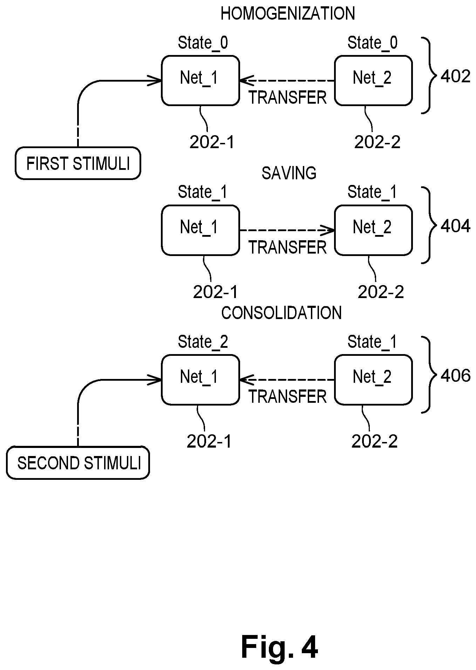

La figure 4 représente trois phases dans un procédé consistant à retenir d'anciens souvenirs dans un réseau de neurones artificiel. En particulier, la figure 4 illustre trois phases mises en œuvre par un algorithme d'apprentissage incrémental. Ce procédé est par exemple mis œuvre par le réseau de neurones artificiel 202. Ce procédé est décrit plus en détail dans la publication de brevet WO2022053474.

Le procédé de la figure 4 implique l'utilisation de deux réseaux de neurones artificiels référencés Net_1 et Net_2 réalisés par exemple par les deux réseaux 202-1 et 202-2. Dans certains modes de réalisation, les réseaux Net_1 et Net_2 ont, comme niveau minimum de similarité, le même nombre de neurones dans leurs couches d'entrée et le même nombre de neurones dans leurs couches de sortie. Dans certains modes de réalisation, ces réseaux ont aussi chacun le même nombre de couches cachées et de neurones. L'architecture des réseaux de neurones Net_1 et Net_2 correspond par exemple à l'architecture décrite en relation avec la figure 3.

Initialement, les réseaux Net_1 et Net_2 ont des états initiaux identiques ou relativement similaires, appelés State_0. L'"état" d'un réseau correspond, par exemple, à des valeurs particulières de paramètres et de poids mémorisés par le réseau.

Dans certains modes de réalisation, par exemple dans le cas où Net_1 et Net_2 ont la même architecture, l'état de l'un des réseaux est initialisé dans un état aléatoire, comme un état initial référencé ici état "vierge". Par exemple, un tel état vierge implique que tous les paramètres et tous les poids du réseau de neurones artificiel ont été mis à des valeurs aléatoires. Cet état est ensuite copié dans l'autre réseau de neurones artificiel, par exemple en copiant chacun des paramètres et poids.

En variante, par exemple si les architectures des réseaux Net_1 et Net_2 sont différentes, l'état initial de l'un des réseaux est par exemple appris par l'autre. Par exemple, le réseau Net_2 est initialisé dans un état vierge aléatoire, puis cet état est transféré vers le réseau Net_1 pendant une opération de pré-homogénéisation (non représentée en figure 4).

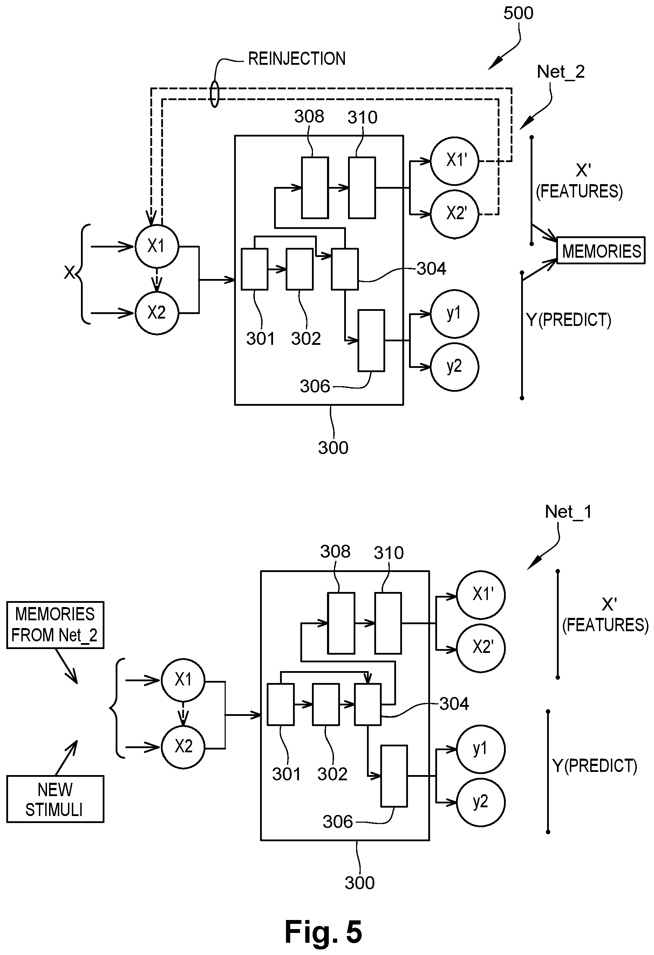

Dans une première phase (HOMOGENIZATION) 402, le réseau Net_1 est agencé pour apprendre des premiers nouveaux stimuli (FIRST STIMULI), ainsi que pour apprendre l'état vierge State_0 à partir du réseau Net_2 comme cela est représenté par une flèche (TRANSFER) allant du réseau Net_2 vers le réseau Net_1. Les premiers nouveaux stimuli comprennent par exemple une ou plusieurs données à apprendre par le réseau Net_1. Le réseau Net_2 est par exemple agencé pour générer des pseudo-données qui décrivent son état d'initialisation (vierge). Dans certains modes de réalisation, un échantillon réel, ou un échantillon constitué de bruit gaussien, est appliqué au réseau Net_2, et une ou plusieurs réinjections sont effectuées, afin de générer les pseudo-données sur la base de trajectoires de pseudo-échantillons. Les étapes de réinjections sont par exemple décrites dans la publication de brevet WO2022053474 ainsi que ci-après, en relation avec la figure 5. On utilise par exemple des outils d'apprentissage profonds classiques pour permettre que les nouvelles données, et les pseudo-données provenant du réseau Net_2, soient apprises par le réseau Net_1 pendant cette phase.

À la fin de la première phase 402, l'état du réseau Net_1 a été modifié à partir de l'état initial State_0 vers un nouvel état State_1.

Dans une deuxième phase (SAVING) 404, l'état State_1 du réseau Net_1 est par exemple transféré vers et mémorisé dans le réseau Net_2, comme cela est représenté par une flèche (TRANSFER) allant du réseau Net_1 vers le réseau Net_2. Dans le cas où les réseaux Net_1 et Net_2 ont la même profondeur et la même largeur entre eux, les paramètres et les poids sont par exemple simplement copiés du réseau Net_1 vers le réseau Net_2 afin de réaliser ce transfert. Une technique connue pour le transfert de connaissance est par exemple décrite dans la publication de brevet WO2022053474 ainsi que ci-après, en relation avec la figure 5.

Ainsi, après la deuxième phase 404, le réseau Net_2 est par exemple capable de donner des performances similaires à celles du réseau Net_1 en ce qui concerne la reproduction d'entrée et la prédiction. Le réseau Net_2 est ainsi capable de générer des anciens souvenirs qui ont été précédemment retenus par le réseau Net_1 pendant un apprentissage ultérieur du réseau Net_1.

Dans une troisième phase (CONSOLIDATION) 406, des deuxièmes nouveaux stimuli (SECOND STIMULI) sont appliqués au réseau Net_1, et le réseau Net_1 est agencé pour apprendre ces deuxièmes nouveaux stimuli ainsi que pour réapprendre l'état State_1 mémorisé par le réseau Net_2, comme cela est représenté par une flèche (TRANSFER) allant du réseau Net_2 vers le réseau Net_1. Les deuxièmes nouveaux stimuli comprennent par exemple une ou plusieurs données additionnelles à apprendre par le réseau Net_1. Le réseau Net_2 est par exemple agencé pour générer, par l'intermédiaire de sa partie auto-associative, par exemple par l'intermédiaire de la couche 306, des pseudo-données qui décrivent l'état mémorisé State_1. Dans certains modes de réalisation, du bruit gaussien est appliqué au réseau Net_2, et une ou plusieurs réinjections sont effectuées, afin de générer les pseudo-données. On utilise par exemple des outils d'apprentissage profonds classiques pour permettre que de nouvelles données, et les pseudo-données provenant du réseau Net_2, soient apprises par le réseau Net_1 pendant cette phase.

L'apprentissage du réseau Net_1 pendant les phases 402 et 406 est par exemple réalisé sur la base d'un certain rapport entre les nouvelles données de stimuli et les pseudo-données. Par exemple, au moins un pseudo-échantillon de données est appliqué au réseau Net_1 pour chaque nouvel échantillon de données de stimuli qui est appliqué, bien que les pseudo-échantillons de données et les nouveaux échantillons de stimuli puissent être groupés. Par exemple, il pourrait y avoir jusqu'à 1000 nouveaux échantillons de stimuli, suivi de jusqu'à 1000 ou plus pseudo-échantillons de données.

Toutefois, l'influence des nouveaux échantillons de données de stimuli, sur le réseau Net_1, est vraisemblablement supérieure à l'influence des pseudo-échantillons de données, et par conséquent, dans certains modes de réalisation il peut y avoir une plus grande proportion de pseudo-échantillons que de nouveaux échantillons de stimuli. Par exemple, dans certains modes de réalisation, le rapport entre les nouveaux échantillons de données de stimuli et les pseudo-échantillons de données est d'au moins 1 à 10, et par exemple d'au moins 1 à 20. Le rapport entre le nombre de pseudo-échantillons et le nombre de nouveaux échantillons de stimuli détermine des propriétés de stabilité et/ou de plasticité du réseau formé par les deux réseaux Net_1 et Net_2.

Un avantage de l'apprentissage, pendant la troisième phase 406, du réseau Net_1 avec à la fois des nouveaux stimuli et des pseudo-données générées par le réseau Net_2 est que d'anciens souvenirs peuvent être appris en même temps que les nouveaux stimuli. En effet, des doses de pseudo-données provenant du réseau Net_2 vont amener le réseau Net_1 à dériver le long de l'espace de paramètres en cherchant une solution qui satisfait à la fois les conditions des nouveaux stimuli et les conditions des pseudo-données. Ainsi, le réseau Net_1 va être entraîné pour adapter à la fois les anciens souvenirs et les nouvelles informations dans son modèle. Ainsi, contrairement à un réseau de neurones artificiel adaptatif qui recevrait uniquement de nouvelles données à apprendre, le réseau Net_1 réapprend ses connaissances antérieures. Le phénomène d'oubli catastrophique ayant lieu dans les réseaux adaptifs est alors limité.

Le procédé de la figure 4 correspond par exemple à une phase d'apprentissage du réseau Net_1 pendant laquelle celui-ci est entraîné, par exemple par un apprentissage supervisé. Après la phase 406, il est, dans certains cas, souhaitable de mettre en œuvre une nouvelle opération d'apprentissage impliquant de nouveaux stimuli, encodant par exemple des changements d'habitude de consommation. Toutefois, faire cela peut de nouveau risquer de provoquer la perte d'informations apprises précédemment par le réseau Net_1. Par conséquent, le processus des phases 404 et 406 consistant à mémoriser l'état du réseau Net_1 dans le réseau Net_2, et à réaliser le nouvel apprentissage parallèlement avec l'apprentissage basé sur d'anciens souvenirs, est répété lorsque de nouveaux stimuli sont soumis à un apprentissage.

La figure 5 représente schématiquement un système 500 pour retenir d'anciens souvenirs dans un réseau de neurones. En particulier, la figure 5 représente un exemple d'architecture des réseaux de neurones Net_1 et Net_2 configurés pour mettre en œuvre les phases d'apprentissage 402 et 406 à la volée.

A titre d'exemple, le réseau Net_1 l'architecture des réseaux Net_1 et Net_2 est l'architecture 300 décrite en relation avec la figure 3. Dans un autre exemple, l'architecture des réseaux Net_1 et Net_2 est l'architecture 300 supplémentée d'une ou plusieurs couches. Ainsi, les parties prédictives des réseaux Net_1 et Net_2 sont chacune configurées pour générer des séries temporelles à deux dimensions Y(PREDICT) comprenant deux vecteurs Y1 et Y2 sur la base d'une entrée X comprenant par exemple deux vecteurs d'entrée X1 et X2, ordonnés temporellement, définissant une série temporelle. Dans un autre exemple, l'entrée X comprennent uniquement une valeur, correspondant par exemple à la dernière consommation mesurée cumulée avec les consommations mesurées sur une même période. Les parties prédictives comprennent par exemple chacune les couches 308 et 310 décrites en relation avec la figure 3.

Le but du modèle neuronal défini par l'architecture du réseau Net_1 est d'approximer une certaine fonction ***F* : *X*** → ***Y*** en ajustant un ensemble de paramètres définissant le réseau Net_1. Les paramètres sont par exemple modifiés pendant l'apprentissage sur la base d'une fonction objectif, comme une fonction de coût, telle que l'erreur quadratique moyenne. Par exemple, la fonction objective est basée sur la différence entre une vérité de terrain et une valeur de sortie. A titre d'exemple la vérité terrain correspond à la consommation réelle et la valeur de sortie correspond à la consommation prédite.

Dans un exemple, la procédure d'apprentissage du réseau Net_1 s'effectue par rétropropagation afin d'apprendre les paramètres du réseau. Lors de la propagation par l'avant, des valeurs d'entrée X s'écoulent à travers la fonction, et sont multipliées par les calculs intermédiaires définissant une fonction de mappage, afin de générer une sortie Y.

Le réseau Net_2 a, par exemple, la même architecture que le réseau Net_1, c'est à dire le même nombre de couches, et le même nombre de neurones sur chaque couche et la même structure d'interconnexion entre les couches.

Pour réduire les erreurs d'estimation dues au phénomène d' « oubli catastrophique » les réseaux et Net_1 et Net_2 comprennent chacun la partie auto-associative capable de reproduire les données d'entrée. Les partie auto-associatives comprennent par exemple chacune la couche 306 décrite en relation avec la figure 3. Les réseaux Net_1 et Net_2 implémentent chacun une sortie additionnelle correspondante (FEATURES) pour générer un pseudo-échantillon de sortie (X') reproduisant l'échantillon d'entrée. Le pseudo échantillon X' comprend par exemple deux vecteurs de sortie X1' et X2', ordonnés temporellement, définissant une série temporelle.

Le réseau Net_2 est en outre configuré pour réaliser une réinjection (REINJECTION) à partir des sorties auto-associatives pour revenir vers les entrées du réseau. Une telle réinjection est réalisée afin de générer des données d'apprentissage synthétiques, c'est-à-dire des pseudo-données.

Dans certains exemples, la réinjection est par exemple réalisée par un générateur de données qui est couplé au réseau de neurones artificiels. Un tel générateur de données est par exemple décrit dans la publication de brevet WO2022053474. La partie auto-associative est utilisée comme fonction récursive, en ce que ses sorties sont utilisées en tant que ses entrées. Cela entraîne une trajectoire des sorties, dans laquelle, après chaque réinjection, les échantillons générés contiennent des informations associées aux tâches précédentes et permettent de mieux capturer la fonction apprise par le réseau de neurones artificiel.

Dans l'exemple de la figure 5, la génération de pseudo-données (MEMORIES) par le réseau Net_2, et l'apprentissage du réseau Net_1 sur la base de ces pseudo-données (MEMORIES FROM Net_2) et sur la base des nouveaux stimuli (NEW STIMULI), ont lieu par exemple au moins partiellement en parallèle.

Le transfert du réseau Net_1 vers le réseau Net_2, réalisé lors de l'étape 404, est par exemple réalisé en utilisant la même approche que celle pour le transfert du réseau Net_2 vers le réseau Net_1, à la différence que les réseaux Net_1 et Net_2 sont inversés. Dans ce cas, le réseau Net_1 est configuré pour générer des pseudo-données et comprend en outre un chemin de réinjection. Dans l'exemple où les réseaux Net_1 et Net_2 ont le même nombre de couches et le même nombre de neurones sur chaque couche, le transfert est, par exemple, mis en œuvre en copiant simplement les paramètres appris et les poids appris du réseau Net_1 vers le réseau Net_2.

Le réseau de neurones artificiel, réalisé par le module de programme 202, comprend ainsi deux réseaux de neurones artificiels ayant une architecture telle que décrite en relation avec la figure 3. Les parties auto-associatives des deux réseaux sont par exemple configurées pour réaliser les étapes de réinjection et de transfert de connaissance, décrites en relation avec les figures 4 et 5. A titre d'exemple, en fonctionnement, un premier est configuré pour recevoir des données réelles, par exemple les séries temporelles générées sur la base de données réelles mesurées par le ou les capteurs 106. Un deuxième réseau est par exemple configuré pour recevoir, lors des étapes de réinjections, les pseudo-données générées. A titre d'exemple, un bruit additionnel, par exemple un bruit gaussien, est ajouté aux pseudo-données avant leur réinjection dans le deuxième réseau.

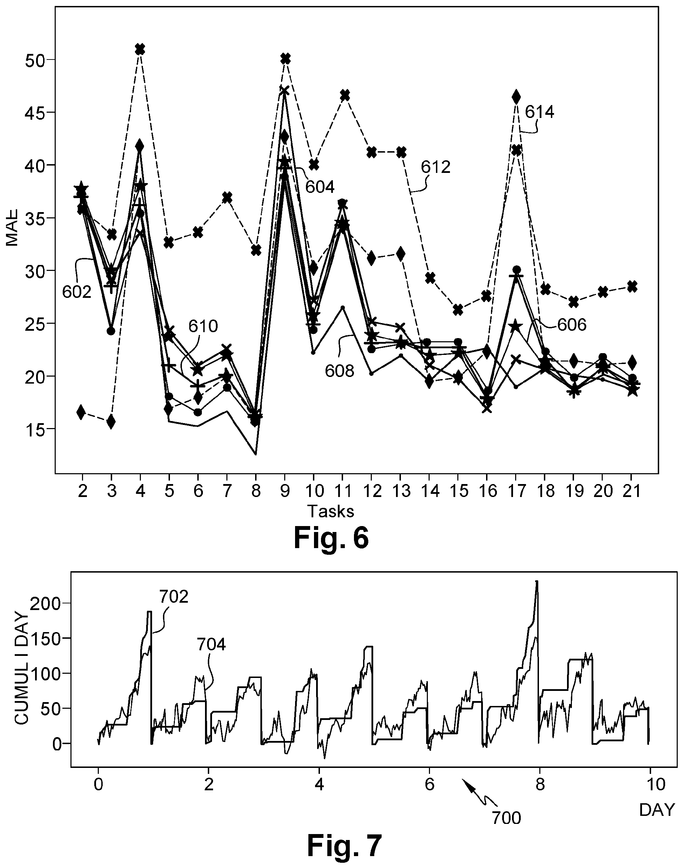

La figure 6 est un graphique 600 illustrant l'erreur moyenne absolue (MAE) entre des estimations réalisées à des horizons temporels à 0,5 heure, 1 heure, 2 heures, 6 heures, 12 heures, 18 heures et 24 heures pour des consommations d'eau chaude dans un bâtiment et les consommations réelles de ce bâtiment à ces horizons temporels pour plusieurs tâches (TASKS). Chaque tâche correspond à un découpage des données mesurées sur une période de, par exemple, un mois.

Des courbes 602, 604, 606 et 608 illustrent, respectivement, l'erreur moyenne absolue pour des réseaux de neurones adaptatifs de type FineTuning, Dark Expérience Replay, Experience Replay et Offline. En particulier, chaque point de chaque courbe correspond à une moyenne sur 5 exécutions d'une tâche par un réseau. Les 5 exécutions sont par exemple réalisées à partir d'une initialisation du réseau de neurones différente. A titre d'exemple, chaque initialisation du réseau correspond à un tirage aléatoire des paramètres le définissant.

Une courbe 610 illustre l'erreur moyenne absolue pour un réseau de neurones, comprenant une partie auto-associative et une partie prédictive. En particulier, le réseau utilisé est un réseau dit DreamNet, par exemple décrit dans la publication « On the beneficial effects of reinjections for continual learning » par Solinas M., Rousset S., Galliere J., Mainsant M., Bourrier Y., Molnos A., Reyboz M. et Mermillod M, publié dans SN Computer Science journal en 2022. Les courbes 612 et 614 illustrent respectivement l'erreur moyenne absolue pour un réseau de neurones artificiel qui n'est pas adaptatif. En particulier, les courbes 612 et 614 illustrent respectivement les résultats d'un réseau de neurones artificiel pré-entrainé sur la base de données obtenues sur 1 mois et sur 3 mois.

Les deux tableaux ci-dessous indiquent la moyenne et l'écart type de l'erreur moyenne absolue pour les réseaux susmentionnés. En particulier, l'erreur moyenne absolue est moyennée pour les différents horizons de prédictions. Un premier tableau [Table 1] illustre les résultats obtenus pour l'estimation d'eau chaude sanitaire d'un premier bâtiment et un deuxième tableau [Table 2] illustre les résultats obtenus pour l'estimation d'eau chaude sanitaire d'un deuxième bâtiment.

**[Table 1]**

| Algorithme | Moyenne MAE sur habitation A (Mean MAE on dwelling A) | Ecart type MAE sur habitation A (MAE standard deviation on Dwelling A) |
|---|---|---|
| Dream Net | 24.805 | 6.929 |
| DER | 25.084 | 7.744 |
| ER | 25.041 | 6.967 |
| Calibration fine (Finetuning) | 24.423 | 6.822 |
| Hors ligne (Offline) | 22.695 | 7.449 |
| 1^{er} mois d'entrainement (1st month training) | 35.513 | 7.54 |
| Trois 1^{er} mois d'entrainement (1st three months training) | 29.376 | 9.249 |

**[Table 2]**

| Algorithme | Moyenne MAE sur habitation B (Mean MAE on dwelling B) | Ecart type MAE sur habitation B (MAE standard deviation on Dwelling B) |
|---|---|---|
| Dream Net | 21.559 | 6.737 |
| DER | 21.457 | 7.328 |
| ER | 21.492 | 7.352 |
| Calibration fine (Finetuning) | 21.351 | 6.212 |
| Hors ligne (Offline) | 19.365 | 5.377 |
| 1^{er} mois d'entrainement (1st month training) | 35.950 | 5.736 |
| Trois 1^{er} mois d'entrainement (1st three months training) | 29.458 | 6.617 |

La figure 7 est un graphique 700 représentant une consommation prédite par le système 100 adapté pour la consommation d'eau chaude sanitaire et la consommation réelle.

Une courbe 702 illustre une consommation réelle d'eau chaude sanitaire dans un bâtiment. A titre d'exemple, cette consommation est mesurée par le ou les capteurs 106 sur une période de 10 jours (DAYS). Dans cet exemple, le ou les capteurs 106 sont configurés pour mesurer la consommation toutes les 30 minutes. En particulier, la courbe 702 présente un cumul des consommations par jour. La courbe 702 présente donc 10 escaliers, chacun représentant le cumul des consommations au cours d'une journée.

Une courbe 704 illustre une prédiction à 6h, par exemple réalisée par l'intermédiaire d'un réseau de neurones de type Dream Net.

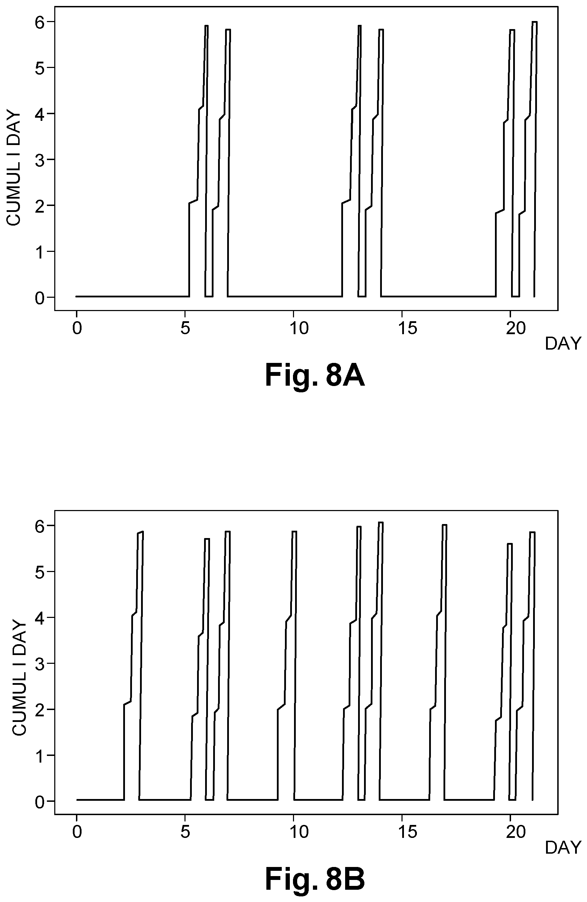

Les figures 8A et 8B sont des graphiques illustrant des exemples de pseudo-données d'entrée pour un réseau de neurones adaptatif. A titre d'exemple une courbe 802 représente des consommations d'eau chaude cumulées par jour et sur 20 jours. Les données de la courbes 802 sont construites de sorte que les consommations d'eau chaude sanitaire ont lieu uniquement deux jours consécutifs par semaines, par exemple uniquement les week-ends. A titre d'exemple une courbe 804 représente des consommations d'eau chaude cumulées par jour et sur 20 jours. Les données de la courbes 804 sont construites de sorte que les consommations d'eau chaude sanitaire ont lieu les mêmes deux jours consécutifs que pour la courbe 802 et un troisième jour de la semaine. Les consommations illustrées par la courbe 804 ont par exemple lieu les mercredis et les week-ends. Les courbes 802 et 804 correspondent à des séries temporelles par exemple prétraitées par le programme 200.

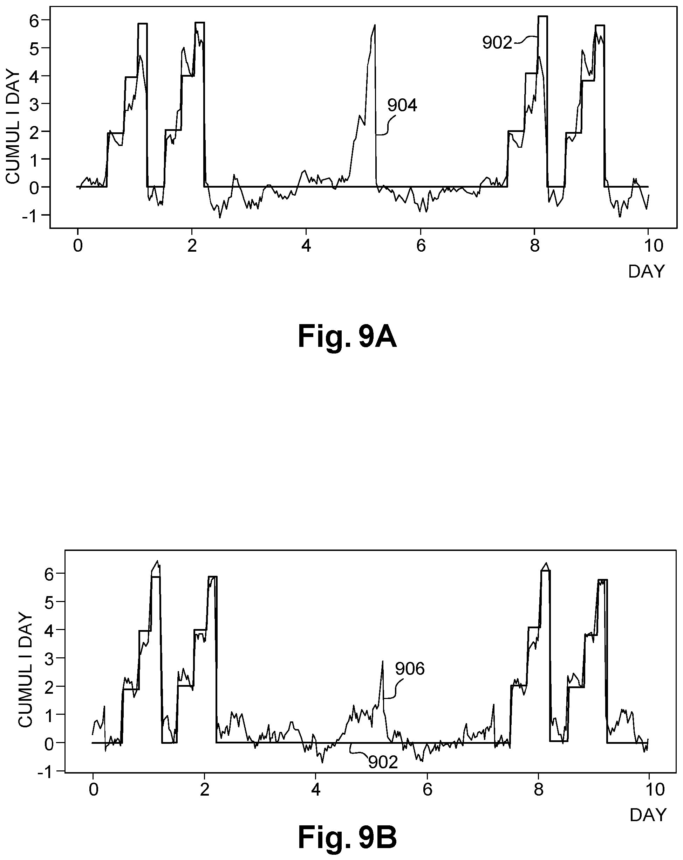

Les figures 9A et 9B sont des graphiques illustrant des consommations estimées par des réseaux adaptatifs entrainés sur la base des données illustrées en relation avec les figures 8A et 8B. En particulier, une courbe 902 illustre la consommation réelle d'eau chaude sanitaire cumulée par jour pour une période de 10 jours. A titre d'exemple, cette consommation est mesurée par le ou les capteur 106.

Les courbes 904 et 906 représentent respectivement les consommations cumulées par jour, pour la même période que la courbe 902, estimées respectivement par un réseau mettant en œuvre un algorithme de Finetuning et un réseau de type DreamNet. Les deux réseaux ont par exemple été pré-entrainé à partir des mêmes jeux de données. Les deux réseaux étant adaptatifs, les scénarios de consommation illustrés par les courbes 802 et 804 leur sont fournies par alternance afin de faire évoluer leur apprentissage. En particulier, pendant un premier mois les deux réseaux ont adapté leur apprentissage en se basant sur une consommation d'eau chaude n'ayant lieu que les week-ends puis, pendant un deuxième mois, sur une consommation d'eau chaude ayant lieu uniquement les mercredis et les week-ends.

La courbe 902 de consommation réelle montre que pour cette vérité terrain, de l'eau chaude sanitaire a été consommée uniquement les week-ends, ce qui correspond au scénario illustré par la courbe 804.

Le réseau mettant en oeuvre l'algorithme de type Finetuning n'étant pas configuré pour pallier le phénomène d'oubli catastrophique, il a tendance à oublier les données fournies le premier mois, ne présentant des consommations que les week-ends, et s'est adapté uniquement au scénario fourni en dernier, dans lequel la consommation a aussi lieu les mercredis. Ainsi, la courbe 904 illustre une surestimation de la consommation ayant lieu le mercredi. En effet le réseau estime que le mercredi la consommation d'eau chaude sanitaire sera similaire à celle ayant lieu les deux jours de week-ends. Le réseau a complètement oublié que certaines semaines aucune consommation n'a lieu le mercredi.

Le réseau de type DreamNet étant configuré pour ne pas oublier les anciennes habitudes, il estime qu'une consommation d'eau chaude sanitaire aura lieu le mercredi, cependant cette estimation est beaucoup moins éloignée de la réalité que celle de la courbe 904. Le réseau de type DreamNet, contrairement à celui mettant en œuvre l'algorithme de Finetuning, a gardé une trace du fait que parfois, aucune consommation d'eau n'a lieu le mercredi.

Un avantage des modes de réalisation décrit est qu'ils permettent la mise en œuvre d'un système de pilotage embarqué. Ainsi, les données mesurées par les capteurs ne sont pas sauvegardées sur une quelconque mémoire externe au système. Ce système garanti ainsi la confidentialité liée à la consommation mesurée. Une personne externe au système de pilotage n'a donc pas accès aux données pouvant par exemple établir des habitudes de consommation.

Un autre avantage des modes de réalisation décrits est que le réseau de neurones est un réseau adaptatif. Ainsi le réseau est configuré pour s'adapter à des modifications de comportement dans la consommation de la ressource. De plus le réseau est un réseau de neurones dont l'entrainement s'effectue selon un procédé d'apprentissage incrémental ce qui lui permet de limiter le phénomène d'oubli catastrophique ayant généralement lieu dans les réseaux de neurones adaptatifs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, pour ce qui est de l'application du système de pilotage. En effet, bien que l'exemple d'une pompe à chaleur ait été pris ici, et utilisé pour les figures 7, 8A, 8B, 9A et 9B, le système de pilotage s'applique bien sûr à d'autres dispositifs. De plus, les intervalles de temps décrits pour les mesures effectuées par les capteurs, ainsi que les horizons temporels des estimations sont donnés à titre d'exemple, la personne du métier saura adapter le système à des mesures plus ou moins fréquentes et pour des estimations à horizons temporels différents.

Enfin, la mise en œuvre pratique des modes de réalisation et variantes décrits est à la portée de la personne du métier à partir des indications fonctionnelles données ci-dessus. En particulier, pour ce qui est du réseau de neurones implémenté, bien que les comparaisons de performances, illustrées par les figures 6 à 9B aient été effectuées suite à l'utilisation d'un réseau de type DreamNet, il est bien sûr possible d'implémenter tout autres réseaux de neurones artificiels de type incrémentaux. De même, les étapes de pré-traitement et de post-traitement des données peuvent varier.

## Revendications

1. Système de pilotage configuré pour fournir et/ou recevoir dans un réservoir tampon, une quantité d'une ressource destinée à ou reçue d'un système cible (102), le système de pilotage comprenant :
- au moins un capteur (106) configuré pour mesurer, périodiquement et dans un premier intervalle de temps, des quantités de la ressource fournie et/ou reçue ;
- un dispositif de traitement (110) configuré pour effectuer une opération de traitement sur les mesures effectuées par l'au moins un capteurs, l'opération de traitement correspondant à la génération d'une première série temporelle dont les valeurs sont des cumuls des quantités mesurées à plusieurs instants temporels ;
le dispositif de traitement comprenant en outre un réseau de neurones (202) comprenant deux sous-réseaux (202-1, 202-2), chacun comprenant une partie auto-associative et une partie prédictive et configurés pour effectuer une opération de transfert d'apprentissage l'un vers l'autre, le réseau de neurones étant configuré pour recevoir la première série temporelle, pour générer au moins une estimation de quantité sur la base de la première série temporelle, et pour commander un actionneur (108) provoquant la préparation du réservoir tampon en vue de la fourniture et/ou de la récupération de la quantité estimée de ressource vers ou depuis le système cible.

2. Système de pilotage selon la revendication 1, dans lequel le dispositif de traitement (110) est configuré pour réinitialiser les valeurs de la première série temporelle périodiquement, par exemple toutes les 24 heures.

3. Système de pilotage selon la revendication 1 ou 2, dans lequel le réseau de neurones (202) comprend une partie prédictive configurée pour générer des estimations de quantité sur un horizon temporel prédéterminé, pour un intervalle de temps postérieur au premier intervalle de temps.

4. Système de pilotage selon la revendication 3, dans lequel l'entrainement du réseau de neurones est effectué selon un procédé d'apprentissage incrémental.

5. Système selon la revendication 4, dans lequel le réseau de neurones (202) comprend en outre une partie auto-associative configurée pour générer une deuxième série temporelle sur la base de la première série temporelle, la deuxième série temporelle étant utilisée comme pseudo-donnée dans le procédé d'apprentissage incrémental.

6. Système de pilotage selon l'une quelconque des revendications 3 à 5, dans lequel la partie prédictive du réseau de neurones (202) comprend au moins une couche dense.

7. Système selon l'une quelconques des revendications 1 à 6, dans lequel le dispositif de traitement (110) comprend une unité de traitement (112) comprenant le réseau de neurones (202) et une unité de contrôle (114) configurée pour commander l'actionneur (108), l'unité de traitement étant en outre configurée pour normaliser les estimations générées par le réseau de neurones incrémentales avant de les fournir à l'unité de contrôle (114).

8. Système de pilotage selon l'une quelconque des revendications 1 à 7, dans lequel le réseau de neurones (202) comprend une couche de type attentionnelle.

9. Système de pilotage selon l'une quelconque des revendications 1 à 8, dans lequel l'au moins un actionneur (108) est configuré pour activer la production et/ou l'absorption de la ressource dans le réservoir tampon à partir ou vers une ressource brute, la ressource étant prélevée du réservoir ou apportée dans le réservoir vers/depuis le système cible de manière intermittente.

10. Système de pilotage selon l'une quelconque des revendications 1 à 9, dans lequel l'actionneur (108) est un moyen de chauffage d'un fluide et la ressource est ledit fluide chauffé à une ou plusieurs températures prédéfinies.

11. Système de pilotage selon la revendication 10, dans lequel l'au moins un capteur (106) est un débitmètre configuré pour mesurer le débit du fluide chauffé consommé par un bâtiment, à intervalle de temps régulier, par exemple toutes les 30 minutes.

12. Système de pilotage selon l'une quelconque des revendications 1 à 9, dans lequel l'actionneur (108) est un groupe électrogène ou un convertisseur d'énergie électrique en une autre forme d'énergie stockable et la ressource est une énergie électrique stockée dans une batterie constituant ledit réservoir tampon.

13. Procédé de pilotage d'un système cible (102) configuré pour fournir une quantité d'une ressource, le procédé comprenant :
- la mesure, périodiquement et dans un premier intervalle de temps, par au moins un capteur (106) d'un système de pilotage, d'une quantité de ressource utilisée ;
- la fourniture de la quantité mesurée à un dispositif de traitement (110) ;
- l'application, par le dispositif de traitement, d'une opération de traitement sur les mesures effectuées par l'au moins un capteurs, correspondant à la génération d'une première série temporelle dont les valeurs sont les cumuls des quantités mesurées ;
- la génération, par un réseau de neurones (202) du dispositif de traitement (110) et sur la base de la première série temporelle, d'une estimation de quantité de ressource, le réseau de neurones comprenant deux sous-réseaux (202-1, 202-2), chacun comprenant une partie auto-associative et une partie prédictive et configurés pour effectuer une opération de transfert d'apprentissage l'un vers l'autre ; et
- la commande, par le dispositif de traitement (110), d'un actionneur (108) du système de pilotage, provoquant la préparation du réservoir tampon en vue de la fourniture et/ou de la récupération de la quantité estimée de ressource vers ou depuis le système cible.

14. Procédé selon la revendication 13, dans lequel l'entrainement du réseau de neurones (202) est mis à jour sur la base de la première série temporelle.

15. Procédé selon la revendication 13 ou 14, dans lequel le réseau de neurones (202) comprend :
- une partie prédictive configurée pour générer des estimations de quantité sur un horizon temporel prédéterminé, pour un intervalle de temps postérieur au premier intervalle de temps ; et
- une partie auto-associative configurée pour générer une deuxième série temporelle sur la base de la première série temporelle, la deuxième série temporelle étant utilisée comme pseudo-donnée dans un procédé d'apprentissage incrémental.
